# EUROPEAN PATENT APPLICATION

(11) **EP 4 084 302 A1**
(43) Date of publication of application: **02.11.2022**
(21) Application number: 21780214.9
(22) Date of filing: 18.03.2021
(51) Int. Cl.: H02K 3/34, H02K 3/46, H02K 1/18

(54) **STATOR AND MOTOR COMPRISING SAID STATOR**

(30) Priority: 30.03.2020 JP 2020060098
(71) Applicant: Daikin Industries, Ltd., Osaka-shi, Osaka 530-8323 (JP)
(72) Inventor: NAKA, Shoujirou, Osaka-shi, Osaka 530-8323 (JP); HIRANO, Masaki, Osaka-shi, Osaka 530-8323 (JP)
(74) Representative: Goddar, Heinz J.
(86) International application number: PCT/JP2021/011054
(87) International publication number: WO 2021/200208

(57) **Abstract**

A stator includes a stator core (13) having a substantially cylindrical back yoke (11) and a plurality of teeth (12) extending radially inward from the back yoke (11). The stator core (13) includes a plurality of stator core pieces (13a) each having one tooth (12) and a yoke piece (11a) forming part of the back yoke (11). On the inside of the back yoke (11) in the radial direction, adjacent ones of the stator core pieces (13a) directly contact each other, or contact each other with a member, as an intervening thing, interposed between the adjacent ones of the stator core pieces (13a).

## Description

### TECHNICAL FIELD

The present disclosure relates to a stator and a motor including the stator.

### BACKGROUND ART

A stator core used for a stator of a motor is formed into a substantially cylindrical shape by curling (bending) after a winding has been wound in a linear straight core state (e.g., Patent Document 1). In this configuration, only part of the stator core on an outer peripheral side is connected. Thus, compressive stress is generated with such a portion as a fulcrum. Such stress causes degradation of the magnetic properties of the stator etc., and for this reason, the techniques of relaxing such stress have been proposed.

For example, in Patent Document 1, slits 8 are provided on both sides of a thin portion 7 of a back yoke portion for bending a stator core 1. It is described that such a configuration allows the stator core to be easily bent and can reduce residual stress.

### CITATION LIST

### PATENT DOCUMENTS

Patent Document 1: WO 2012/105262

### SUMMARY OF THE INVENTION

### TECHNICAL PROBLEM

In the above-described configuration, the slits are provided, and for this reason, the cross-sectional area of the back yoke portion is decreased and a magnetic path width is decreased. As a result, magnetic saturation is likely to occur, and thus, an iron loss increases.

It is an object of the present disclosure to provide a stator core configured so that stress can be relaxed without decreasing the cross-sectional area of a back yoke portion.

### SOLUTION TO THE PROBLEM

A first aspect of the present disclosure is directed to a stator including a stator core (13) having a substantially cylindrical back yoke (11) and a plurality of teeth (12) extending radially inward from the back yoke (11). The stator core (13) includes a plurality of stator core pieces (13a) each having one tooth (12) and a yoke piece (11a) forming part of the back yoke (11). On the inside of the back yoke (11) in the radial direction, adjacent ones of the stator core pieces (13a) directly contact each other, or contact each other with a member, as an intervening thing, interposed between the adjacent ones of the stator core pieces (13a).

In the first aspect, the stator core pieces (13a) contact each other on the inside of the back yoke (11) in the radial direction, and therefore, stress in the vicinity of a connection portion between the yoke pieces (11a) is relaxed.

A second aspect of the present disclosure is an embodiment of the first aspect. In the second aspect, each tooth (12) includes a tooth extending portion (16) extending in the circumferential direction of the back yoke (11) and the tooth extending portions (16) provided at adjacent ones of the stator core pieces (13a) contact each other.

In the second aspect, the tooth extending portions (16) contact each other, and therefore, stress in the vicinity of the connection portion between the yoke pieces (11a) is relaxed.

A third aspect of the present disclosure is an embodiment of the first aspect. In the third aspect, each stator core piece (13a) further has a yoke extending portion (31) extending radially inward from the back yoke (11) and the yoke extending portions (31) provided at adjacent ones of the stator core pieces (13a) contact each other.

In the third aspect, the yoke extending portions (31) contact each other, and therefore, stress in the vicinity of the connection portion between the yoke pieces (11a) is relaxed.

A fourth aspect of the present disclosure is an embodiment of the second or third aspect. In the fourth aspect, the tooth extending portion (16) or the yoke extending portion (31) has a narrowed portion.

In the fourth aspect, the narrowed portion is provided, and therefore, propagation of stress to the tooth (12) or the back yoke (11) can be reduced.

A fifth aspect of the present disclosure is an embodiment of any one of the second to fourth aspects. In the fifth aspect, the stator core (13) has a configuration in which a plurality of electromagnetic steel plates cut into the same shape are stacked on each other and each electromagnetic steel plates has, at a location corresponding to the tooth extending portion (16) or the yoke extending portion (31), a bent portion (23) bent so as to protrude in the axial direction of the back yoke (11) having the substantially cylindrical shape.

In the fifth aspect, the bent portion (23) is provided, and therefore, propagation of stress to the tooth (12) or the back yoke (11) can be reduced.

A sixth aspect of the present disclosure is an embodiment of the first aspect. In the sixth aspect, an insulator (14) is provided so as to cover at least part of each stator core piece (13a) and adjacent ones of the stator core pieces (13a) contact each other with the insulator (14), as the intervening thing, interposed between the adjacent ones of the stator core pieces (13a).

In the sixth aspect, the stator core pieces (13a) contact each other with the insulator (14), as the intervening thing, interposed therebetween, and therefore, stress in the vicinity of the connection portion between the yoke pieces (11a) is relaxed.

A seventh aspect of the present disclosure is an embodiment of the first aspect. In the seventh aspect, each of the plurality of teeth (12) is provided with a coil (15) and a slot cell (33), adjacent ones of the stator core pieces (13a) contact each other with both the coil (15) and the slot cell (33) or only the slot cell (33) , as the intervening thing, interposed between the adjacent ones of the stator core pieces (13a), and the slot cell (33) insulates the coil (15) and the tooth (12) from each other and insulates the coils provided at adjacent ones of the stator core pieces (13a) from each other.

In the seventh aspect, the stator core pieces (13a) contact each other with the slot cell (33) and/or the coil (15), as the intervening thing, interposed therebetween, and therefore, stress in the vicinity of the connection portion between the yoke pieces (11a) is relaxed.

An eighth aspect of the present disclosure is directed to a motor including the stator of any one of the first to seventh aspects, a rotor being provided coaxially with the stator on the inside of the stator.

In the eighth aspect, the magnetic properties of the stator of any one of the first to seventh aspects are improved, and therefore, motor performance is improved.

### BRIEF DESCRIPTION OF THE DRAWINGS

FIG. 1 is a cross-sectional view schematically showing a stator of a first embodiment of the present disclosure.
FIG. 2 is a view showing a stator core in the stator of FIG. 1.
FIG. 3 is a view showing a straight core forming the stator core of FIG. 2 by curling.
FIG. 4 is a view showing contact between tooth extending portions upon curling of the straight core of FIG. 3.
FIG. 5 is a view showing protrusion of the tooth extending portion from an extended plane of a yoke end portion.
FIG. 6 is a view showing an example where a recess is provided at the tooth extending portion.
FIG. 7 is a view showing an example where the stator core has a multilayer structure of electromagnetic steel plates and the electromagnetic steel plate has a bent structure at a location corresponding to the tooth extending portion.
FIG. 8 is a view showing, as an example, the bending structure and the recess at the tooth extending portion.
FIG. 9 is a view showing an example where the tooth extending portion is bent multiple times.
FIG. 10 is a view showing yoke extending portions provided at a stator core piece in a second embodiment.
FIG. 11 is a view showing contact between the yoke extending portions after curling.
FIG. 12 is a view showing a stator core piece provided with an insulator in a third embodiment.
FIG. 13 is a view showing contact between the stator core pieces through the insulators as an intervening thing after curling.
FIG. 14 is a view showing a stator core piece provided with a slot cell and a coil in a fourth embodiment.
FIG. 15 is a view showing contact between the stator core pieces through the slot cells and the coils as an intervening thing after curling.
FIG. 16 is a view showing a motor including the stator of FIG. 1.

### DESCRIPTION OF EMBODIMENTS

### «First Embodiment»

A first embodiment will be described. A stator (10) includes a stator core (13) having a substantially cylindrical back yoke (11) and a plurality of teeth (12) extending radially inward from the back yoke (11). The stator core (13) includes a plurality of stator core pieces (13a) each having one tooth (12) and a yoke piece (11a) forming part of the back yoke (11). On the inside of the back yoke (11) in the radial direction, adjacent ones of the stator core pieces (13a) directly contact each other, or contact each other with a member, as an intervening thing, interposed therebetween.

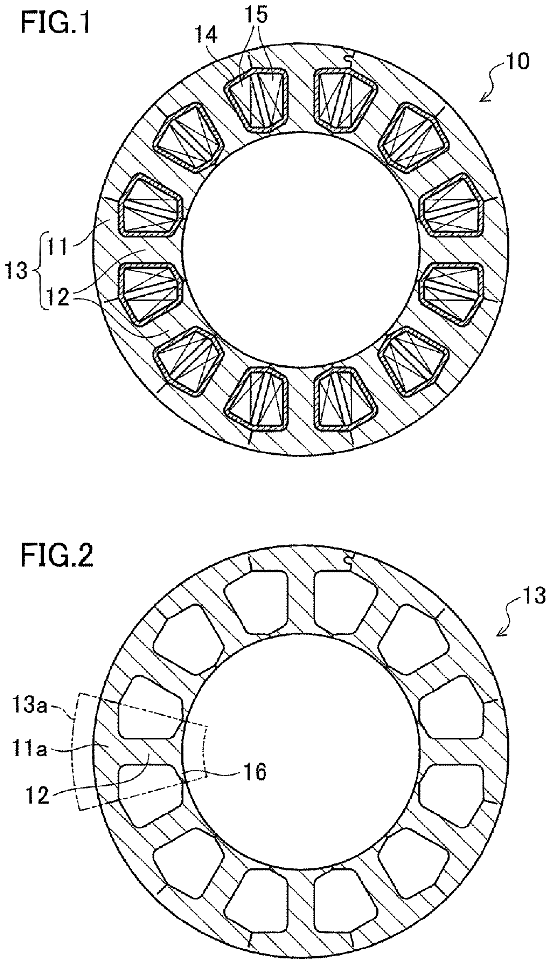

More specifically, FIG. 1 is a cross-sectional view schematically showing the stator (10) of this embodiment as an example. The stator (10) includes the stator core (13) and coils (15).

The stator core (13) includes the substantially cylindrical back yoke (11) and the plurality of teeth (12) extending radially inward from the back yoke (11). A winding is wound around each tooth (12) to form the coil (15). The stator core (13) and each coil (15) are electrically insulated by an insulator (14) and a slot cell (not shown).

Next, FIG. 2 is a view for more specifically describing the stator core (13). The stator core (13) includes the plurality of stator core pieces (13a). Each stator core piece (13a) includes the yoke piece (11a) forming part of the back yoke (11) and the tooth (12). The yoke pieces (11a) at the plurality of stator core pieces (13a) are coupled to each other at narrow connection portions to form the substantially cylindrical back yoke (11). As a result, the teeth (12) extend radially inward from the back yoke (11).

Tooth extending portions (16) extending in the circumferential direction of the back yoke (11) are provided at inner tip ends of the teeth (12) in the radial direction. The tooth extending portions (16) provided at adjacent ones of the stator core pieces (13a) contact each other.

Note that in the present application, a term "substantially cylindrical" refers to a shape which is generally recognized as a cylindrical shape, and it is not essential to be a mathematically precise "cylinder." For example, there may be unevenness, deformation, etc. caused due to machining accuracy, convenience in a machining method, etc. or understood as causing no problem as common general technical knowledge. The same also applies to an expression "cylindrical" alone. Similarly, a "substantially circular shape" is not necessarily a mathematical "circle."

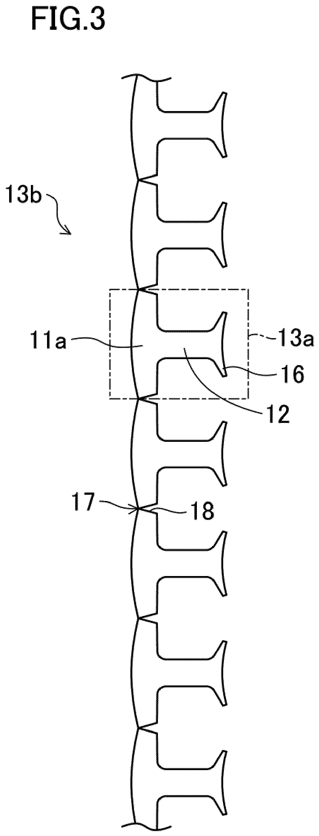

The stator core (13) of FIG. 2 is formed in such a manner that a straight core (13b) in a linearly-extending state shown in FIG. 3 is curled (bent) and wound. Note that although not shown in FIG. 3, curling is performed after the insulators (14), the coils (15), etc. are arranged on the straight core (13b). As a result of such a configuration, the cross-sectional shape of the outer peripheral surface of the stator core (13) may be a polygonal shape having rounded sides (also in this case, the stator core (13) is assumed to be in a substantially cylindrical shape).

At the straight core (13b), the yoke pieces (11a) are substantially linearly coupled to each other. At a connection portion (17) between the stator core pieces (13a) (the yoke pieces (11a)), e.g., a triangular notch 18 is formed from a tooth (12) side so that the straight core (13b) can be narrowed and be bent and wound with the tooth (12) side facing inward. Thus, the substantially cylindrical stator core (10) can be formed.

As described above, when the stator core (13) in the state of FIG. 2 is formed by curling, the tooth extending portions (16) come into contact with each other. This configuration is achieved by providing the tooth extending portions (16) having such a length. The tooth extending portions (16) contact each other so that the back yoke (11) can be maintained in the substantially cylindrical shape. Thus, stress concentration on the vicinity of the connection portion (17) and a yoke end portion (11b) at the back yoke (11) can be avoided.

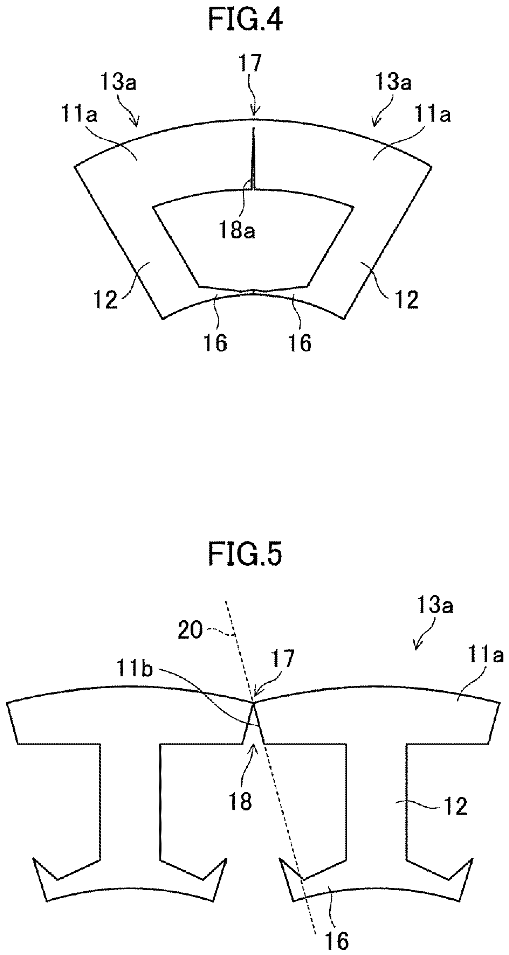

This point will be described with reference to FIG. 4. In FIG. 4, two adjacent stator core pieces (13a) (the half of each piece is shown) of the stator core (13) in a curled state are shown. Note that although curling is performed with the insulators (14), the coils (15), etc. provided, only the stator core (13) is shown in the figure.

When the straight core (13b) of FIG. 3 is curled, the back yoke (11) is bent mainly at the narrow connection portions (17). Upon such curling, tip ends of the tooth extending portions (16) come into contact with each other, and accordingly, the positions of the adjacent stator core pieces (13a) are held and the back yoke (11) is entirely formed into the substantially cylindrical shape. Further, although the notch 18 is narrowed by curling, contact between end portions of adjacent yoke pieces (11a) can be avoided. As a result, exertion of force from the yoke pieces (11a) on each other due to contact therebetween and stress concentration on the vicinity of the connection portion (17) and the yoke end portion (11b) can be avoided. Note that depending on the length of the tooth extending portion (16), there is no clearance in the notch 18 in a state in which the tooth extending portions (16) contact each other and the end portions of the yoke pieces (11a) might contact each other. Also in this case, as compared to a case where the tooth extending portions (16) do not contact each other (thus, do not contribute to retention of the shape of the back yoke (11)), stress concentration on the connection portion (17) and the yoke end portion (11b) can be relaxed.

As described above, an increase in stress in the vicinity of the connection portion (17) and the yoke end portion (11b) at the back yoke (11) can be reduced. This configuration can reduce degradation of magnetic properties and further reduce an increase in an iron loss.

Further, unlike a case where the back yoke (11) is provided with slits (for stress relaxation upon curling), the cross-sectional area of the back yoke (11) is not decreased. Thus, there is also no decrease in a magnetic path width due to the slits, and therefore, an increase in the iron loss due to magnetic saturation can be avoided.

Further, in order to maintain the stator core (13) in the substantially cylindrical shape, stress is concentrated and increased at a portion where the tooth extending portions (16) of the adjacent stator core pieces (13a) contact each other. Although the contact portion between the tooth extending portions (16) may serve as a magnetic flux path, the magnetic properties of the contact portion between the tooth extending portions (16) are degraded and passage of a magnetic flux is reduced due to great stress.

When the stator core (13) is combined with a rotor to form a motor, a magnetic flux from a magnet of the rotor turns into a leakage magnetic flux which does not contribute to rotation of the rotor after the magnetic flux has passed through the tooth extending portion (16). However, since passage of the magnetic flux is reduced at the contact portion between the tooth extending portions (16) as described above, the leakage magnetic flux and a decrease in torque due to such a leakage magnetic flux are reduced.

Further, in a case where there is no contact between the tooth extending portions (16) and there is a space between tip ends of the teeth (12), a magnetic permeability is greatly different between the tooth (12) and the space between the teeth (12), leading to torque ripple. On the other hand, in a case where the tooth extending portions (16) contact each other, fluctuation in the magnetic permeability is reduced, and the torque ripple can be reduced as compared to a case where the tooth extending portions (16) do not contact each other.

Next, FIG. 5 is a view schematically showing an area corresponding to two stator core pieces (13a) at the straight core (13b). Upon curling, the straight core (13b) is bent such that the yoke end portions (11b) of adjacent ones of the yoke pieces (11a) come into contact with each other. If the tooth extending portion (16) protrudes from an extended plane (shown as an extension (20) in the figure) of the yoke end portion (11b), the tooth extending portions (16) come into contact with each other upon curling as described above. It is also conceivable that the tooth extending portions (16) exert force on each other and deform to some extent. In addition, it is also conceivable that in a case where the amount of protrusion from the extension (20) is great, a clearance remains between the yoke end portions (11b).

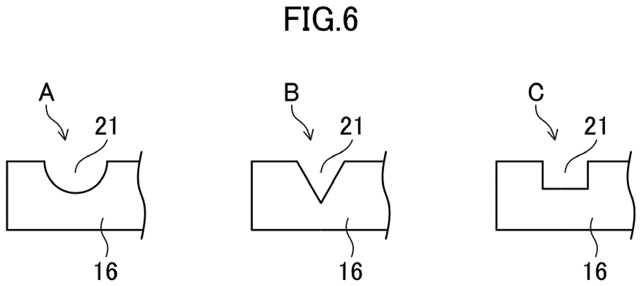

In the example of FIG. 5, the tip end of the tooth extending portion (16) is in a triangular claw shape. However, the tip end portion of the tooth extending portion (16) may be in various shapes. Particularly in a preferred embodiment, the tooth extending portion (16) has a portion narrowed by formation of a recess. FIG. 6 shows a semicircular shape A, a triangular shape B, and a rectangular shape C as examples of the shape of the recess (21). These shapes are examples, and other shapes may be employed.

As described above, in a case where the narrow portion is provided at the tooth extending portion (16), stress caused due to contact between the tooth extending portions (16) is concentrated on such a narrow portion. As a result, propagation of stress to the tooth (12) side at the tooth extending portion (16) can be reduced. Thus, degradation of the magnetic properties due to stress on the teeth (12) can be reduced.

### -Tooth Extending Portion Bending Structure-

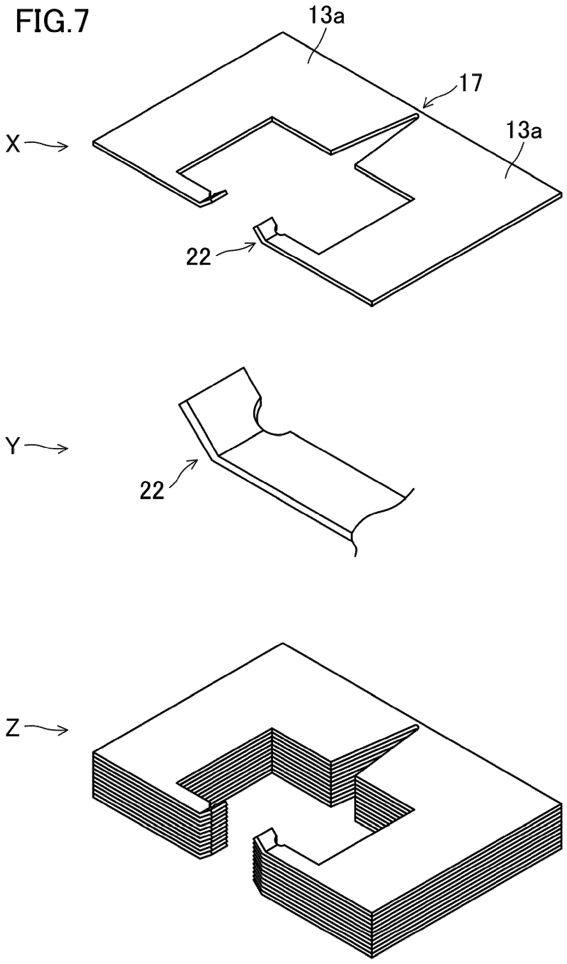

Next, a configuration shown in FIG. 7 will be described. At the tooth extending portion (16), an uneven portion may be provided in the direction of the center axis of the back yoke (11) having the substantially cylindrical shape. This configuration may be achieved by a configuration in which the stator core (13) is formed of a stack of a plurality of electromagnetic steel plates.

In this case, the stator core (13) has a configuration in which a plurality of electromagnetic steel plates cut into the same shape are stacked on each other, and each electromagnetic steel plate has, at locations corresponding to the tooth extending portions (16), bent portions (23) bent so as to protrude in the axial direction of the back yoke (11) in the substantially cylindrical shape.

FIG. 7 schematically shows a bending structure (22) of the tooth extending portion (16) for a single punched electromagnetic steel plate (X). Here, only the half of each of two adjacent stator core pieces (13a) is shown, and a portion of the bending structure (22) is enlarged and separately shown (Y). Further, Z shows a state in which a plurality of electromagnetic steel plates X is stacked on each other. FIG. 7 shows the state of the straight core (13b) before curling.

By providing such a bending structure (22) as well, stress caused due to contact between the tooth extending portions (16) can be concentrated on such a portion. Thus, as in a case where the recesses are provided, degradation of the magnetic properties due to propagation of stress to the tooth (12) side is reduced.

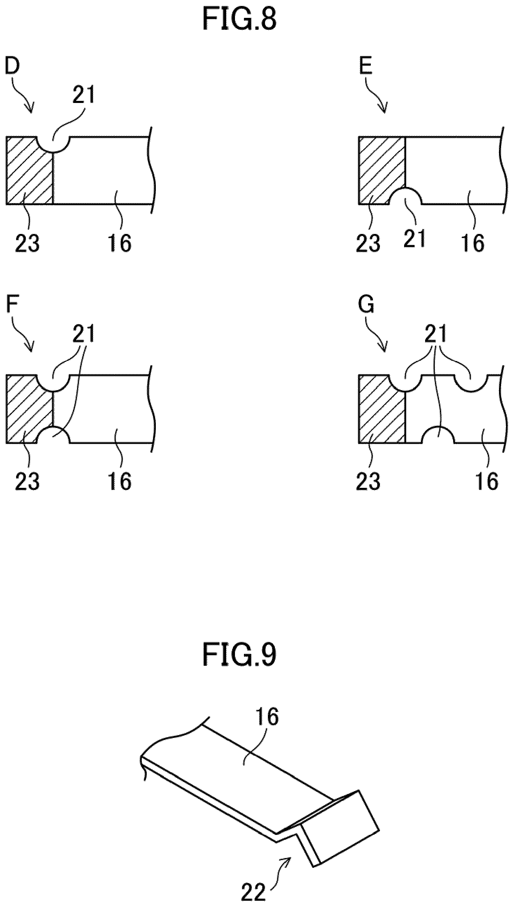

Note that both the bending structure (22) and the recess (21) may be provided. FIG. 8 shows some examples.

In FIG. 8, the bent portion (23) bent obliquely in the thickness direction of the electromagnetic steel plate (in the axial direction of the stator core (13)) is provided in the vicinity of the tip end of the tooth extending portion (16). In D, the recess (21) is provided at a boundary between the bent portion (23) and a non-bent portion. This case is shown in FIG. 7.

In addition, in E, the recess (21) is provided at a similar location, but is provided on the side opposite to that in the case of D at the tooth extending portion (16). In the case of F, the recesses (21) are provided on both sides of the tooth extending portion (16).

Providing the recess (21) at the position overlapping with the bent portion (23) is preferable because stress can be further concentrated. However, the recess (21) may be provided only at a location not overlapping with the bent portion (23). A plurality of recesses (21) may be provided. An example where the recesses (21) are also provided at other positions in addition to the position overlapping with the bent portion (23) is shown in G of FIG. 8.

Also, in FIGS. 7 and 8, there is only one region which is obliquely bent. However, bending may be performed multiple times. Such an example is shown in FIG. 9. In the case of FIG. 9, the vicinity of the tip end of the tooth extending portion (16) has a structure in which the tooth extending portion (16) is bent once in each of the opposite directions.

### <<Second Embodiment>>

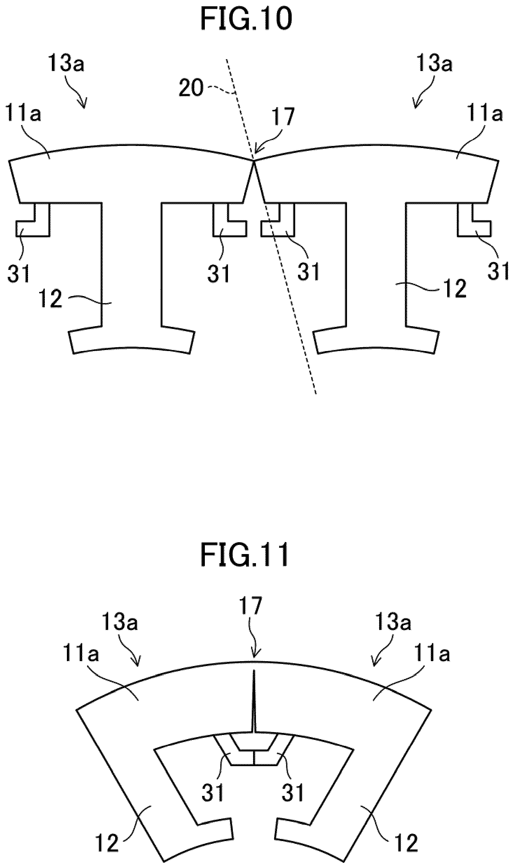

A second embodiment will be described with reference to FIGS. 10 and 11. A stator and a stator core of this embodiment are basically similar to the stator (10) and the stator core (13) of the first embodiment shown in FIGS. 1 and 2. That is, the stator core includes stator core pieces (13a) each having a yoke piece (11a) and a tooth (12), and a back yoke (11) is formed in a cylindrical shape. Each tooth (12) is provided with a coil (15) through an insulator (14). The second embodiment is similar to the first embodiment in that the coil (15) is provided in the state of a straight core (13b) and the cylindrical stator shown in FIG. 1 is formed by curling.

Note that in this embodiment, the stator core pieces (13a) are provided with no tooth extending portions (16) which are configured to contact each other. Instead, the stator core piece (13a) further includes yoke extending portions (31) extending radially inward from the back yoke (11), and the yoke extending portions (31) of adjacent ones of the stator core pieces (13a) contact each other (FIGS. 10 and 11).

This configuration will be further described. Two adjacent stator core pieces (13a) in the state of the stator core (13b) are shown in FIG. 10. At the stator core piece (13a), the yoke extending portions (31) are provided so as to extend from the yoke piece (11a) to a tooth (12) side (inward of the stator core (13) after curling). The yoke extending portion (31) is formed so as to face the yoke extending portion (31) of the adjacent stator core piece (13a) and protrude from an extended plane (shown as an extension (20) in the figure) of a yoke end portion (11b). Thus, when the straight core (13b) is curled into the cylindrical stator core (13), the yoke extending portions (31) of the adjacent stator cores (13) come into contact with each other. This configuration is shown in FIG. 11.

FIG. 11 corresponds to FIG. 4 of the first embodiment. In this embodiment, no tooth extending portions (16) contacting each other are provided. Instead, the yoke extending portions (31) are provided, which come into contact with each other upon curling. Thus, the positions of the adjacent stator core pieces (13a) are held, and the back yoke (11) is entirely formed in the substantially cylindrical shape. As a result, stress concentration on the vicinity of a connection portion (17) and the yoke end portion (11b) can be relaxed, and degradation of magnetic properties and an increase in an iron loss can be reduced.

In the example of FIGS. 10 and 11, the yoke extending portion (31) is in an L-shape. The yoke extending portion (31) extends in the same direction as that of the tooth (12) (radially inward of the stator core (13)), and further extends along the direction of the yoke piece (11a) so as to face the yoke extending portion (31) of the adjacent stator core piece (13a). However, this configuration is an example, and other shapes may be employed. For example, a shape gently curved in an arc may be employed.

Further, as in the tooth extending portion (16) of the first embodiment, the yoke extending portion (31) may be provided with a recess (21) and a bending structure (22) (a bent portion (23)).

In this case, the stator core (13) has a configuration in which a plurality of electromagnetic steel plates cut into the same shape are stacked on each other, and each electromagnetic steel plate has, at locations corresponding to the yoke extending portions (31), bent portions (23) bent so as to protrude in the axial direction of the back yoke (11) in the substantially cylindrical shape.

Similarly to the tooth extending portion (16) shown in FIGS. 6 to 9, the bent portion 23 and the recess (21) may be provided in combination, or only one of the bent portion 23 or the recess (21) may be provided. In addition, one or more bent portions (23) or one or more recesses (21) may be provided.

By providing the recess (21) and/or the bending structure (22), a region where stress is concentrated can be controlled. In particular, stress on the yoke piece (11a) can be reduced, and degradation of the magnetic properties of the yoke piece (11a) can be reduced.

### <<Third Embodiment>>

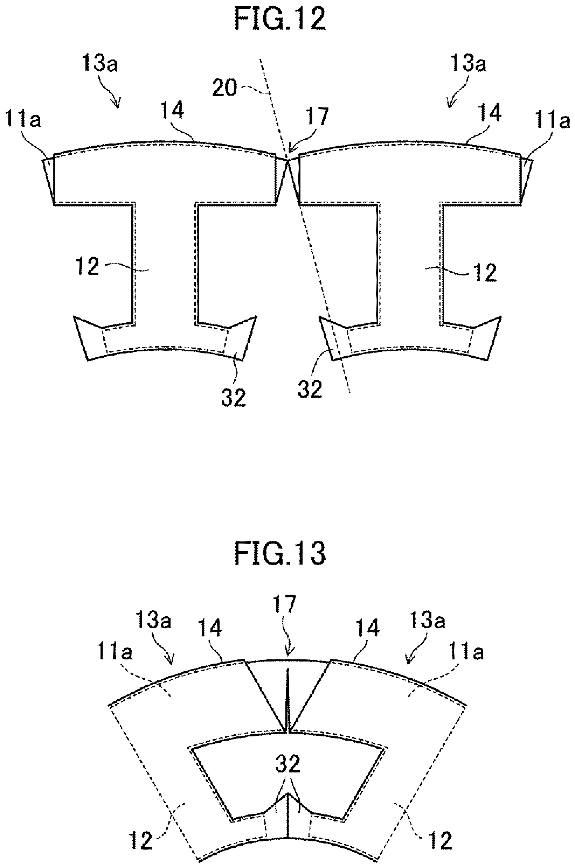

A third embodiment will be described with reference to FIGS. 12 and 13. A stator and a stator core of this embodiment are basically similar to the stator (10) and the stator core (13) of the first embodiment shown in FIGS. 1 and 2. That is, the stator core includes a plurality of stator core pieces (13a) each having a yoke piece (11a) and a tooth (12), and a back yoke (11) is formed in a cylindrical shape.

Note that in this embodiment, the stator core pieces (13a) are provided with no tooth extending portions (16) (and the yoke extending portions (31) of the second embodiment) which are configured to contact each other.

Instead, an insulator (14) is provided so as to cover at least part of each stator core piece (13a), and adjacent ones of the stator core pieces (13a) contact each other with the insulator (14), as an intervening thing, interposed therebetween. When the stator (10) including coils (15) and the insulators (14) is formed by curling, the insulators (14) each provided at adjacent ones of the stator core pieces (13a) come into contact with each other. This configuration is shown in FIG. 12.

Two adjacent stator core pieces (13a) in the state of a straight core (13b) are shown in FIG. 12. Each stator core piece (13a) is provided with the insulator (14) for insulating the coil (15) (not shown) and the stator core piece (13a) from each other. The insulator (14) includes, at a tip end portion of the tooth (12), an insulator extending portion (32) extending in a direction in which the yoke piece (11a) extends (in the circumferential direction of the stator core (13) after curling). The insulator extending portion (32) is formed so as to face the insulator extending portion (32) of the adjacent stator core piece (13a) and protrude from an extended plane (shown as an extension (20) in the figure) of a yoke end portion (11b). Thus, when the straight core (13b) is curled into the cylindrical stator core (13), the insulator extending portions (32) of the adjacent stator cores (13) come into contact with each other. This configuration is shown in FIG. 13.

FIG. 13 corresponds to FIG. 4 of the first embodiment. In FIG. 13, the insulators (14) are shown, but the coils (15) are not shown.

The stator core pieces (13a) of this embodiment are provided with no tooth extending portions (16) (and no yoke extending portions (31)) which are configured to contact each other. Instead, after curling, the insulator extending portions (32) of the insulators (14) each provided at the stator core pieces (13a) contact each other. That is, the stator core pieces (13a) indirectly contact each other through the insulators (14) (the insulator extending portions (32)) instead of providing a portion where the stator core pieces (13a) directly contact each other in addition to a connection portion (17) after the straight core (13b) has been curled. Thus, the positions of the adjacent stator core pieces (13a) are held, and the back yoke (11) is entirely formed in the substantially cylindrical shape. As a result, stress concentration on the vicinity of the connection portion (17) and the yoke end portion (11b) can be relaxed, and degradation of magnetic properties and an increase in an iron loss can be reduced.

### <<Fourth Embodiment>>

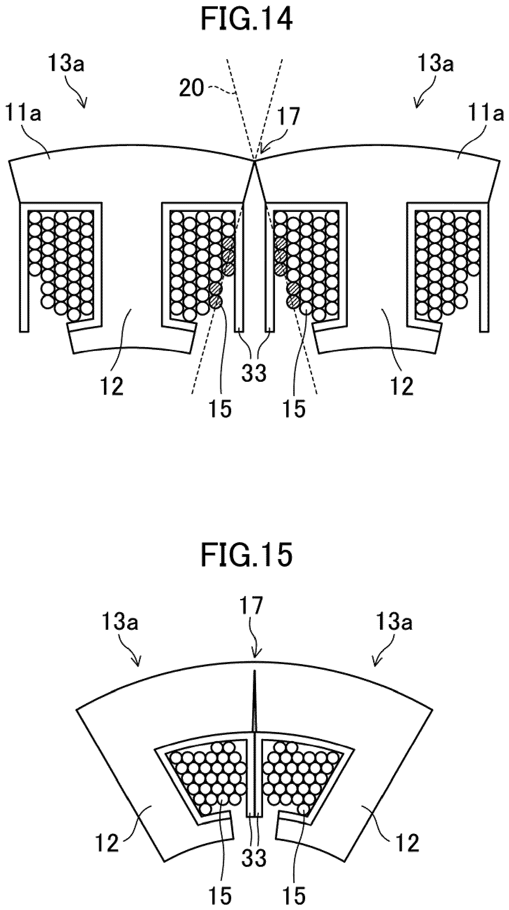

A third embodiment will be described with reference to FIGS. 14 and 15. A stator and a stator core of this embodiment are basically similar to the stator (10) and the stator core (13) of the first embodiment shown in FIGS. 1 and 2. The stator core includes a plurality of stator core pieces (13a) each having a yoke piece (11a) and a tooth (12), and a back yoke (11) is formed in a cylindrical shape.

Note that also in this embodiment, the stator core pieces (13a) are provided with no tooth extending portions (16) (and no yoke extending portions (31) of the second embodiment) which are configured to contact each other.

Instead, a coil (15) and a slot cell (33) are provided at each of the plurality of teeth (12), and adjacent ones of the stator core pieces (13a) contact each other with both the coils (15) and the slot cells (33) or only the slot cells (33), as an intervening thing, interposed therebetween. The slot cell (33) insulates the coil (15) and the tooth (12) from each other, and insulates the coils provided at adjacent ones of the stator core pieces (13a) from each other.

When the stator (10) including the coils (15) and insulators (14) is formed by curling, the slot cells (33) each provided at adjacent ones of the stator core pieces (13a) come into contact with each other. Here, the slot cells (33) are configured to prevent the coils (15) of adjacent ones of the stator core pieces (13a) from directly contacting each other.

Two adjacent stator core pieces (13a) in the state of a straight core (13b) are shown in FIG. 14. Each stator core piece (13a) is provided with the coil (15) provided on the tooth (12) and the slot cell (33) for insulating the tooth (12) and the coil (15) from each other. The coil (15) and the slot cell (33) are provided so as to protrude from an extended plane (shown as an extension (20) in the figure) of a yoke end portion (11b). Thus, when the straight core (13b) is curled into the cylindrical stator core (13), the coils (15) of the adjacent stator cores (13) come into contact with each other through the slot cells (33). This configuration is shown in FIG. 15.

FIG. 15 corresponds to FIG. 4 of the first embodiment. The stator core pieces (13a) of this embodiment are provided with no tooth extending portions (16) (and no yoke extending portions (31)) which are configured to contact each other. Instead, after curling, the coils (15) each provided at the stator core pieces (13a) contact each other with the slot cell (33) interposed therebetween. That is, the stator core pieces (13a) indirectly contact each other through the coils (15) and the slot cells (33) as an intervening thing instead of providing a portion where the stator core pieces (13a) directly contact each other in addition to a connection portion (17) after the straight core (13b) has been curled. Thus, the positions of the adjacent stator core pieces (13a) are held, and the back yoke (11) is entirely formed in the substantially cylindrical shape. As a result, stress concentration on the vicinity of the connection portion (17) and the yoke end portion (11b) can be relaxed, and degradation of magnetic properties and an increase in an iron loss can be reduced.

### -Variation of Fourth Embodiment-

A variation of the fourth embodiment will be described. Referring to FIGS. 14 and 15, it has been described that both the coil (15) and the slot cell (33) protrude from the extended plane (the extension (20)) of the yoke end portion (11b) in the state before curling.

On the other hand, in the variation, only the slot cell (33) protrudes from the extension (20), and the coil (15) does not extend beyond the extension (20) (each coil (15) is on the tooth (12) side). This state can be considered as a state in which there are no windings drawn with diagonal lines among the windings of the coils (15) in FIG. 14 (although no diagonal lines are drawn, the same also applies to the coils (15) at the right and left ends in FIG. 14). Note that the number of windings may be further reduced.

In this case as well, after the straight core (13b) has been curled, the stator core pieces (13a) directly contact each other with the slot cells (33), as an intervening thing, interposed therebetween. Thus, the positions of the adjacent stator core pieces (13a) are held, and the back yoke (11) is entirely formed in the substantially cylindrical shape. As a result, stress concentration on the vicinity of the connection portion (17) and the yoke end portion (11b) can be relaxed, and degradation of magnetic properties and an increase in an iron loss can be reduced.

### <<Other Embodiments>>

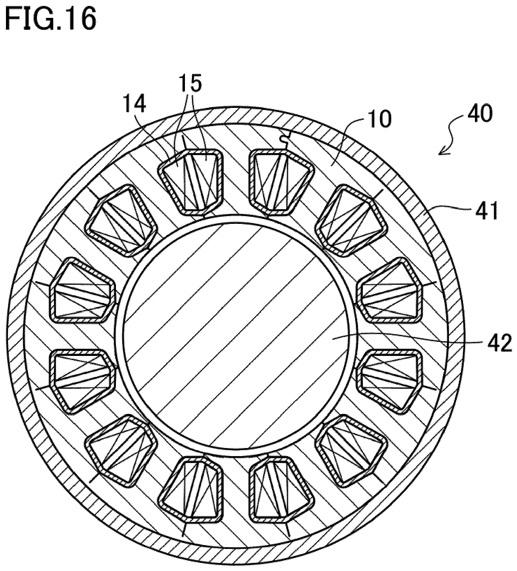

Next, a motor using the stator core (13) of the present disclosure will be described with reference to FIG. 16. FIG. 16 is a view schematically showing a motor (40) using the stator (10) of the first embodiment. The stator core (13) is fixed to an inner peripheral surface of a cylindrical frame (41). A rotor (42) is provided inside the stator core (13) so as to be coaxial with the stator core (13).

The motor (40) having such a configuration exhibits improved performance because the iron loss in the stator core (13) is reduced and the magnetic properties are improved.

Noted that although not shown separately, motors using the stator cores (13) of the second to fourth embodiments can be formed and any of these motors exhibits improved performance, needless to say.

While the embodiment and variations thereof have been described above, it will be understood that various changes in form and details may be made without departing from the spirit and scope of the claims. The embodiments and the variations thereof may be combined and replaced with each other without deteriorating intended functions of the present disclosure.

### INDUSTRIAL APPLICABILITY

As described above, the present disclosure is useful for a stator and a motor including the stator.

### DESCRIPTION OF REFERENCE CHARACTERS

- 10: Stator
- 11: Back yoke
- 11a: Yoke Piece
- 11b: Yoke End Portion
- 12: Tooth
- 13: Stator Core
- 13a: Stator Core Piece
- 13b: Straight Core
- 14: Insulator
- 15: Coil
- 16: Tooth Extending Portion
- 17: Connection Portion
- 20: Extension
- 21: Recess
- 22: Bending Structure
- 23: Bent Portion
- 31: Yoke Extending Portion
- 32: Insulator Extending Portion
- 33: Slot Cell
- 40: Motor
- 41: Frame
- 42: Rotor

## Claims

1. A stator comprising:
a stator core (13) having a substantially cylindrical back yoke (11) and a plurality of teeth (12) extending radially inward from the back yoke (11),
the stator core (13) including a plurality of stator core pieces (13a) each having one tooth (12) and a yoke piece (11a) forming part of the back yoke (11),
on an inside of the back yoke (11) in a radial direction, adjacent ones of the stator core pieces (13a) directly contacting each other or indirectly contacting each other with a member, as an intervening thing, interposed between the adjacent ones of the stator core pieces (13a).

2. The stator of claim 1, wherein
each tooth (12) includes a tooth extending portion (16) extending in a circumferential direction of the back yoke (11), and
the tooth extending portions (16) of adjacent ones of the stator core pieces (13a) contact each other.

3. The stator of claim 1, wherein
each stator core piece (13a) further has a yoke extending portion (31) extending radially inward from the back yoke (11), and
the yoke extending portions (31) of adjacent ones of the stator core pieces (13a) contact each other.

4. The stator of claim 2 or 3, wherein
the tooth extending portion (16) or the yoke extending portion (31) has a narrowed portion.

5. The stator of any one of claims 2 to 4, wherein
the stator core (13) has a configuration in which a plurality of electromagnetic steel plates cut into an identical shape are stacked on each other, and
each electromagnetic steel plates has, at a location corresponding to the tooth extending portion (16) or the yoke extending portion (31), a bent portion (23) bent so as to protrude in an axial direction of the back yoke (11) having a substantially cylindrical shape.

6. The stator of claim 1, wherein
each stator core piece (13a) is provided with an insulator (14) covering at least part of the each stator core piece (13a), and
adjacent ones of the stator core pieces (13a) contact each other with the insulator (14), as the intervening thing, interposed between the adjacent ones of the stator core pieces (13a).

7. The stator of claim 1, wherein
each of the plurality of teeth (12) is provided with a coil (15) and a slot cell (33),
adjacent ones of the stator core pieces (13a) contact each other with both the coil (15) and the slot cell (33) or only the slot cell (33), as the intervening thing, interposed between the adjacent ones of the stator core pieces (13a), and
the slot cell (33) insulates the coil (15) and the tooth (12) from each other, and insulates the coils of adjacent ones of the stator core pieces (13a) from each other.

8. A motor comprising:
the stator of any one of claims 1 to 7; and
a rotor provided coaxially with the stator on an inside of the stator.
